(19) Europäisches Patentamt
European Patent Office
Office européen des brevets

(11) Publication number: **0 143 552**
**B1**

(12) **EUROPEAN PATENT SPECIFICATION**

(45) Date of publication of patent specification: **06.09.89**

(51) Int. Cl.$^4$: **B 01 D 13/04**

(21) Application number: **84307384.2**

(22) Date of filing: **26.10.84**

# (54) Composite membrane and process for the production thereof.

(30) Priority: **27.10.83 JP 202450/83**

(43) Date of publication of application:
**05.06.85 Bulletin 85/23**

(45) Publication of the grant of the patent:
**06.09.89 Bulletin 89/36**

(84) Designated Contracting States:
**BE DE FR GB NL**

(56) References cited:
**EP-A-0 099 432**
**EP-A-0 113 574**
**FR-A-2 293 960**
**GB-A-2 102 334**
**JP-A-59 120 207**

**PATENT ABSTRACTS OF JAPAN, vol. 8, no. 150 (C-233)1587r, 12th July 1984; & JP-A-59 55 313 (KOGYO GIJUTSUIN (JAPAN)) 30-03-1984**

**The file contains technical information submitted after the application was filed and not included in this specification**

(73) Proprietor: **NITTO DENKO CORPORATION**
**1-2, Shimohozumi 1-chome Ibaraki-shi Osaka (JP)**

(72) Inventor: **Kazuse, Yoshitaka c/o Nitto Electric Industrial Co., Ltd. 1-2, Shimohozumi 1-chome Ibaraki-shi Osaka (JP)**
Inventor: **Iwama, Akio c/o Nitto Electric Industrial Co., Ltd. 1-2, Shimohozumi 1-chome Ibaraki-shi Osaka (JP)**
Inventor: **Chikura, Shinichi c/o Nitto Electric Industrial Co., Ltd. 1-2, Shimohozumi 1-chome Ibaraki-shi Osaka (JP)**
Inventor: **Tasaka, Kentaro c/o Nitto Electric Industrial Co. Ltd 1-2, Shimohozumi 1-chome Ibaraki-shi Osaka (JP)**

(74) Representative: **Moore, Anthony John et al**
**Gee & Co. Chancery House Chancery Lane London WC2A 1QU (GB)**

(56) References cited:
**PATENT ABSTRACTS OF JAPAN, vol. 9, no. 91 (C-277)1814r, 19th April 1985; & JP-A-59 225 705 (NITTO DENKI KOGYO K.K.) 18-12-1984**

**PATENT ABSTRACTS OF JAPAN, vol. 6, no. 191 (C-127)1069r, 30th September 1982; & JP-A-57 105 203 (TORAY K.K.) 30-06-1982**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 143 552 B1**

Courier Press, Leamington Spa, England.

**Description**

The present invention relates to a novel composite membrane and a process for the production thereof. More particularly, it is concerned with a composite membrane suitable for use in membrane separation of an organic solution containing a relatively small solute having a molecular weight of from several tens to several thousands, liquid/liquid separation by the pervaporation method, and concentration and separation of gases.

For selective separation or removal of a specific component contained in a liquid or gas mixture, separation methods utilizing a membrane has received increasing attention in recent years. This has already been put to practical use in several fields. For example, it is known that a membrane made of a silicon resin is effective in separating an organic component, i.e., a low molecular weight organic compound such as methanol, ethanol, propanol or acetone from an aqueous solution containing the organic compound, or in separation and concentration of oxygen in air. One of the reasons is that a silicone resin exhibits a high selective permeability for a specific organic compound since its surface tension is small as compared with that of the usual organic resins and, furthermore, its intermolecular force is small. Another reason is that among the various resins, the silicone resins have the highest coefficient of permeation for oxygen and nitrogen, for example. Membranes made of polydimethyl siloxane, polydiphenyl siloxane, polyvinyl trimethyl siloxane, and the like have heretofore been used.

Membranes made of such silicone resins, however, generally have a poor mechanical strength. In practical membrane separation, therfore it is necessary for the thickness of the membrane to be increased to more than 100 μm. As is well known, the permeation flux of a membrane is in inverse proportion to its thickness. Therefore, although the silicone membranes have a high coefficient of permeation for organic compounds and gases, they suffer from a problem that a permeation flux is small, which is a factor determining economic efficiency in membrane separation.

In order to overcome the above problem, it has already been proposed to form a thin film of a silicone resin on a porous substrate made of an organic polymer such as polysulfone or polyacrylonitrile which is conventionally known as an ultrafiltration membrane to thereby increase the mechanical strength of the silicone resin membrane and also to increase the permeation flux by reducing its thickness as described in, for example, Japanese Patent Application (OPI) Nos. 86684/78 and 82380/79 (the term "OPI" as used herein refers to a "published unexamined Japanese patent application"). In forming a silicone resin thin film on such a porous substrate, it is necessary that a solution of the silicone resin in an organic solvent be coated and then the solvent be evaporated. Since, however, such a porous substrate is generally of low resistance to organic solvents, organic solvents which can be used in preparation of the silicone resin solution are limited to aliphatic solvents of low dissolving power such as hexane or heptane. Furthermore, these aliphatic solvents are able to dissolve only silicone resins having a low molecular weight. Thus, the mechanical strength of a silicone resin thin film formed on a substrate is not sufficiently high and, furthermore, its thickness is still considerable. In other words, a silicone resin having a molecular weight of 10,000 or more, which is desirable to use in preparation of a thin film having a high mechanical strength, is soluble only in organic solvents of high dissolving power such as toluene, ethyl acetate or methyl ethyl ketone, and a solution of the silicone resin in such an organic solvent cannot be coated on a porous substrate as described above.

EP—A— 113 574 discloses a gas-selective composite membrane comprising (a) a supporting membrane which is gas-selective and has an asymmetrical pore structure and is made of a polyetherimide having a specified formula (A) optionally copolymerised with another polymer (B), e.g. a polycarbonate or aromatic polyester, on which is (b) a film, 50 microns thick or less if laminated or as thin as 0.3 micron if deposited by plasma polymerisation, of a polymer such as a polysiloxane; the film impregnates the pores in the supporting structure. This membrane is used for separation of gases.

For separation of an organic liquid mixture, a semipermeable membrane made of an aromatic polyimide resin, and a semipermeable membrane made of a polyimide resin as prepared by condensation of 1,2,3,4-butanetetracarboxylic acid or its derivative and an aromatic diamine have been proposed and put to practical use. Solutes which can be separated by such a polyimide resin semi-permeable membrane are limited to those having a molecular weight of several thousands or more. Thus, such a polyimide resin membrane cannot be applied to reverse osmosis permitting the separation of a solute having a relatively small molecular weight of from several tens to several thousands, or to membrane separation in the intermediate range between reverse osmosis and ultrafiltration.

The present invention is intended to overcome the various problems described above.

An object of the present invention is to provide a composite membrane suitable for use in membrane separation of an organic solution containing a low molecular solute having a molecular weight of from several tens to several thousands, separation by the pervaportion method of a low molecular weight organic compound such as methanol, ethanol, propanol or acetone from an aqueous solution contining the organic compound, and separation of a gas mixture such as separation of oxygen from nitrogen in the air.

Another object of the present invention is to provide a process for producing such a composite membrane.

The composite membrane according to the present invention comprises an organic resin substrate bearing a silicone resin thin film on a surface thereof, characterised in that the substrate is an anisotropic

membrane having a porous layer continuously connected to a dense surface layer and formed of a polyimide resin consisting essentially of a repeating unit represented by the following general formula (I):

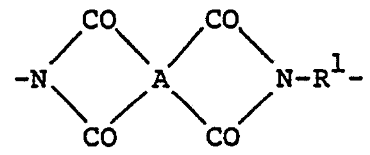

(I)

wherein A is a tetravalent aliphatic or aromatic group, and $R^1$ is a divalent aromatic, alicyclic or aliphatic hydrocarbon group, or a divalent organic group comprising the hydrocarbon groups linked together through a divalent organic linking group, in that the polyimide resin anisotropic membrane has a molecular weight cut-off of from 1,000 to 100,000, in that the thin film is formed of the cross-linked silicone resin which has an average molecular weight equivalent to or greater than the molecular weight cut-off of the polyimide resin anisotropic membrane, in that the thin film is borne by the dense surface layer of the anisotropic membrane so that the silicone resin does not permeate into the inside of the membrane, and in that the thickness of the thin film is 10 to 5,000Å.

Further, the process for producing the composite membrane according to the present invention comprises contacting a solution of a cross-linkable silicone resin in an organic solvent with the dense surface layer of the anisotropic membrane as defined above, characterised in that the cross-linkable silicone resin has an average molecular weight equivalent to or greater than a molecular weight cut-off of the anisotropic membrane, in that the anisotropic membrane has the molecular weight cut-off of from 1,000 to 1,000,000 and in that the concentration of the cross-linkable silicone resin in the solution is from 0.01 to 10% by weight.

In the present invention, a cross-linkable silicone resin which is soluble in an organic solvent before cross-linking is dissolved in an organic solvent to prepare a relatively low concentration organic solution, the organic solution is coated on the surface of a dense layer of a polyimide resin to form a thick layer of the resin solution, the organic solvent is evaporated and the cross-linkable silicone resin is then cross-linked to form a thin film of a silicone resin which is insoluble by the organic solvent, whereby a composite membrane having a thin film of a cross-linked silicone resin on the dense layer of polyimide can be obtained. In the present invention, organic solvents which are difficult to use in the conventional techniques can be used in preparation of a thin resin film. Thus, the present invention permits production of a composite membrane with a thin silicone film which is superior in mechanical strength and is uniform in quality.

Particularly preferred polyimide resin is a polyimide resin consisting essentially of a repeating unit represented by the formula:

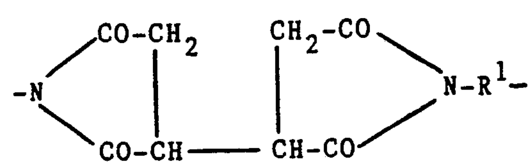

(II)

wherein $R^1$ is as defined above.

The intrinsic viscosity, [η], of the polyimide resin is preferably from 0.5 to 2 and more preferably from 0.7 to 1.1. The intrinsic viscosity as used herein is determined at 30°C as an N-methyl-2-pyrrolidone solution. If the intrinsic viscosity is too small, the polyimide resin is inferior in membrane-forming ability. On the other hand, if it is too large, the polyimide resin is only sparingly soluble in an organic solvent, resulting in impairment of membrane-forming workability.

As is well known, an anisotropic membrane of a polyimide resin has an anisotropic structure such that a dense surface layer is supported by a porous layer in one body. Anisotropic membranes having ultrafiltration performance can be produced by, for example, the methods described in Japanese Patent Application (OPI) Nos. 152507/80 and 139104/81.

Anisotropic ultrafiltration membranes made of polyimide resins comprising repeating units represented by the following formulae:

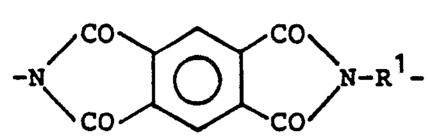

(III)

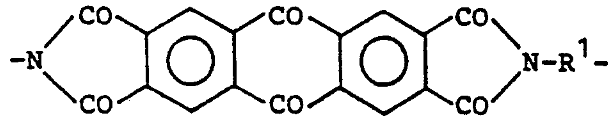

(IV)

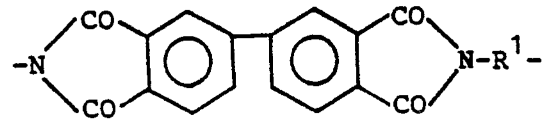

(V)

wherein $R^1$ is as defined above, are also suitable to use.

Ultrafiltration membranes having an anisotropic structure which are made of these polyimide resins are already known and can be produced by, for example, the methods described in H. Strathmann, *Desalination*, 26, 85 (1978) and U.S. Patent 3,925,211. These polyimide resins are usually insoluble in a solvent. Therefore, polyamic acid which is a precursor of the polymide and is soluble in a solvent is applied and shaped into a membrane and, thereafter, it is ring-closed by heating or by a suitable chemical procedure into the corresponding polyimide resin. In the present invention, for the same reason as described above, it is preferred to use a polyamic acid having an intrinsic viscosity [η] falling within the range of from 0.5 to 5.

In the above formulae, $R^1$ is a divalent aromatic, alicyclic or aliphatic hydrocarbon group, or a divalent organic group wherein the above hydrocarbon groups are linked with a divalent organic linking group.

Examples of the aliphatic group include a straight or branched alkylene group having from 1 to 20 carbon atoms.

Examples of the alicyclic group include a cycloalkylene group having from 5 to 12 carbon atoms which may be substituted with an alkyl group.

Examples of the aromatic group include a phenylene group and a naphthylene group, each having from 6 to 12 carbon atoms, which may be substituted with an alkyl group.

In addition, $R^1$ may be a divalent organic group wherein the above divalent hydrocarbon groups are linked with a divalent organic linking group. Examples of such divalent organic linking groups are, for example,

$—CH_2—$, $—C(CH_3)_2—$, —O—, —S—, $—SO_2—$, —CO—,

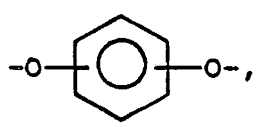, 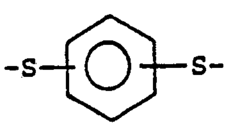 and $-Si(CH_3)_2-$.

For the anisotropic membrane of the above polyimide resin to have an excellent resistance against organic solvents, it is preferred that $R^1$ be a divalent aromatic hydrocarbon group or a divalent aromatic group comprising at least two aromatic hydrocarbon groups linked together through an organic linking group as described above. Preferred examples of such aromatic groups are, for example,

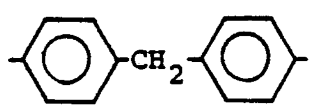 and 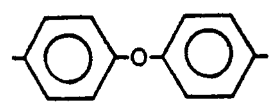.

In the present invention, the above polyimide resin semipermeable membrane preferably has a molecular weight cut-off of from 1,000 to 100,000, more preferably from 20,000 to 50,000. If the anisotropic membrane has a molecular weight cut-off of less than 1,000, the permeation flux of the ultimate composite membrane is not sufficiently large. On the other hand, if the molecular weight cut-off is more than 100,000, the cross-linkable silicone resin permeates into the membrane at the time of formation of a thin film layer as described hereinafter, thereby forming a dense silicone resin film having a three dimensional net-like structure also in the membrane. This results in a substantial increase in the thickness of the dense layer and also a decrease in permeation flux.

The molecular weight cut-off can be determined by measuring the rejection of anisotropic membrane to a solute having a known molecular weight. In the present invention, a toluene solution containing as a solute 5,000 ppm of polyethylene glycol having a monodisperse molecular weight distribution is applied onto the surface of the membrane at a temperature of 25°C under a pressure of 2 $kg/cm^2$, and the molecular weight of polyethylene glycol having a rejection of at least 90% is referred to as the molecular weight cut-off of the membrane.

An anisotropic membrane having such a molecular weight cut-off is generally called an ultrafiltration membrane in liquid separation. In the present invention, it is sometimes called an ultrafiltration membrane.

The above anisotropic membrane is used either as a dry membrane or as a glycerin-containing dry membrane.

In accordance with the present invention, an organic solution of a cross-linkable silicone resin is brought into contact with the surface of a dense layer of an anisotropic membrane made of such a polyimide resin to form a uniform thin layer of the organic solution on the surface of the dense layer, the solvent is evaporated from the organic solution thin layer and, if necesasry, the layer is heated to cross-link the cross-linkable silicone resin, whereby an organic solvent-insoluble cross-linked silicone resin thin film is formed on the surface of the dense layer of the polyimide ultrafiltration membrance.

The term "a cross-linkable silicone resin" as used herein means a silicone resin which is soluble in organic solvents before cross-linking but, when cross-linked, provides an organic solvent-insoluble resin. In the present invention, there is preferably used an organopolysiloxane having a reactive group at each terminal as represented by the formula:

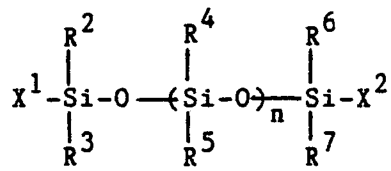

(VI)

wherein $X^1$ and $X^2$ are each a reactive group selected from vinyl groups, acryloxyalkyl groups, methacryloxyalkyl groups, hydroxy groups, hydroxyalkyl groups, acyloxy groups, aminoalkyl groups and carboxylalkyl groups; $R^2$, $R^3$, $R^4$, $R^5$, $R^6$ and $R^7$ are each an organic group selected from alkyl groups (e.g., methyl and ethyl groups), halogenated alkyl groups (e.g., a fluoroalkyl group), vinyl groups and aryl groups (e.g., a phenyl group); and n is an integer of from 400 to 1,000. It is easy to form a cross-linkable silicone resin having a high average molecular weight from such an organopolysiloxane.

In the above formula (VI), the repeating unit may be partially replaced by a unit of the formula:

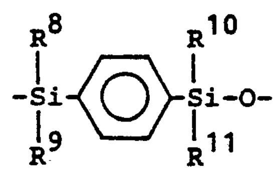

(VIA)

wherein $R^8$, $R^9$, $R^{10}$ and $R^{11}$ are as defined for $R^2$ to $R^7$.

Representative examples of such organopolysiloxanes are shown below.

Vinyl-Terminated Organopolysiloxanes:

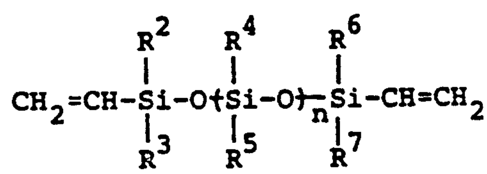

(VII)

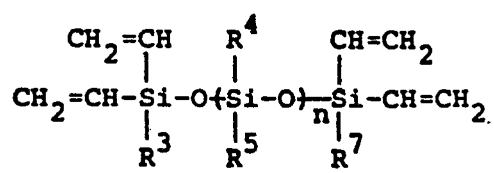

(VIII)

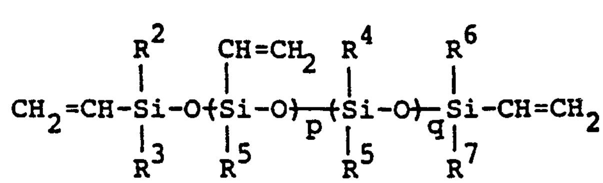

(IX)

wherein p+q=n.

Acryloxy or Methacryloxyalkyl-Terminated Organopolysiloxanes:

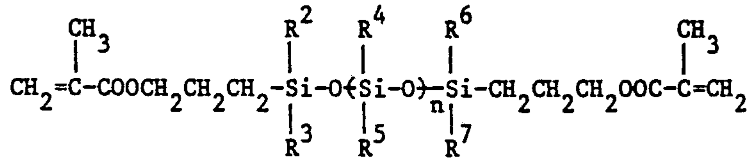
(X)

Silanol-Terminated Organopolysiloxanes:

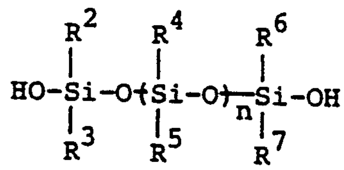
(XI)

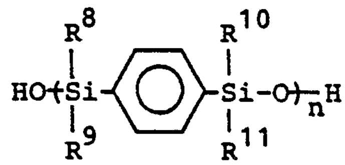
(XII)

Acyloxy-Terminated Organopolysiloxanes:

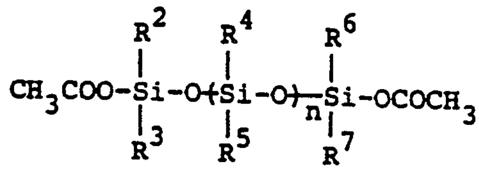
(XIII)

Aminoalkyl-Terminated Organopolysiloxanes:

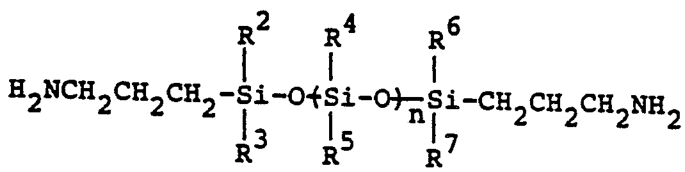
(XIV)

Carboxyalkyl-Terminated Organopolysiloxanes:

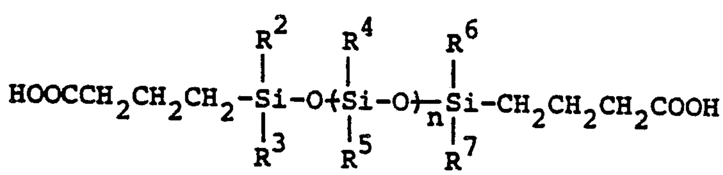
(XV)

Hydroxyalkyl-Terminated Organopolysiloxanes:

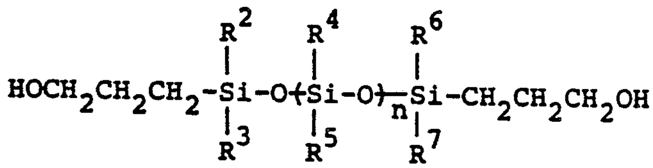
(XVI)

In the above formulae, $R^1$ to $R^{11}$ are each preferably an alkyl group having up to 9 carbon atoms or an aryl group and more preferably an alkyl group such as a methyl group, an ethyl group or a propyl group, or a phenyl group.

In the present invention, at least one of cross-linkable silicone resins as described above is dissolved in an organic solvent, the resulting solution is brought into contact with the surface of the dense layer of the

polyimide ultrafiltration membrane, and the coating is then three dimensionally cross-linked in the presence or absence of a catalyst or a hardener, if necessary, under heating, thereby forming an insolubilized thin film of the cross-linked silicone resin.

For example, when silanol-terminated organopolysiloxane, hydroxyalkyl-terminated organopolysiloxane, acetoxy-terminated organopolysiloxane, or the like is used as a cross-linkable silicone resin, it can be insolubilized by evaporating the solvent from the solution, if necessary, under heating.

When aminopropyl-terminated organopolysiloxane, carboxypropyl-terminated organopolysiloxane, hydroxy-terminated organopolysiloxane, and the like are used, it is preferred to use a hardener in combination. Suitable examples of such hardeners are three or more functional polyisocyanates and polyfunctional epoxy resins. A preferred example of polyisocyanates is "COLONATE L" (triisocyanate produced by Nippon Polyurethane Kogyo Co., Ltd.). Polyfunctional epoxy resins are not particularly limited and conventional epoxy resins containing at least 3 epoxy groups in the molecule can be used.

In combination with the above three-functional hardeners, two-functional diisocyanates and epoxy resins can be used. This combination is preferred in some cases. Diisocyanates which can be used include tolylene diisocyanate, m-xylene diisocyanate, 4,4'-diphenylmethane diisocyanate, polytetramethylene glycol diisocyanate, and polypropylene glycol diisocyanate.

In cases in which vinyl-terminated organopolysiloxane and acryloxy or methacryloxy-terminated organopolysiloxane are used as cross-linkable silicone resins, they can be cross-linked by using a radial initiator as a catalyst. As these radical initiators, various compounds can be used. Typical examples thereof are organic peroxides and azo compounds, such as benzoyl peroxide, methyl ethyl ketone peroxide, cumene hydroperoxide or azobisisobutyronitrile.

In these cases, in place of the radical initiator, ultraviolet rays and electromagnetic radiations such as electron rays, neutron rays, α-rays, β-rays, γ-rays and X-rays can be used.

In accordance with the present invention, an organic solution of a cross-linkable silicone resin as described above is brought into contact with the surface of a dense layer of an anisotropic membrane of a polyimide resin as described above to form a thin layer of the resin solution, the organic solvent is evaporated (if necessary, under heating) and, thereafter, the layer is heated to cross-link the cross-linkable silicone resin, whereby a silicone resin thin film which is insoluble in organic solvents is formed. It is desirable for the resin thin film to be as thin as possible. The reason for this is, as described above, that the liquid or gas permeation flux of a composite membrane is substantially determined by the thickness of the resin film; i.e. the liquid or gas permeation flux increases as the thickness decreases.

In the present invention, therefore, it is desirable that the concentration of the cross-linkable silicone resin in the organic solution by relatively low. The concentration of the resin is usually from 0.01 to 10% by weight and preferably from 0.1 to 5% by weight. If the resin concentration is less than 0.01% by weight, defects such as pinholes tend to be formed in the thin film formed. On the other hand, if it is in excess of 10% by weight, the thickness of the resulting film is too great and thus the permeation flux is too small, which is unsuitable for practical use.

If in bringing the organic solution of the cross-linkable silicone resin into contact with the surface of the dense layer of the anisotropic membrane made of the polyimide resin, the resin permeates into the inside of the anisotropic membrane and is cross-linked therein, a dense silicone resin layer is also formed in the membrane. As a result, there is a danger that the thickness of the dense layer is substantially increased. In the present invention, therefore, it is preferred that the average molecular weight of the cross-linkable silicone resin is equal to or greater than the molecular weight cut-off of the polyimide resin anisotropic membrane. Thus, the cross-linkable silicone resin is chosen so as to satisfy the above requirements, taking into consideration the molecular weight cut-off of the polyimide resin anisotropic membrane used. A cross-linkable silicone resin having an average molecular weight of from 1,000 to 1,000,000, preferably from 10,000 to 200,000 is usually used. The term "average molecular weight" as used herein means a weight average molecular weight as determined by the GPC method.

Since, in the present invention, all the above-described polyimide resins have excellent resistance against organic solvents, organic solvents which can be used in the preparation of the organic solution of the cross-linkable silicone resin are not limited. A suitable organic solvent is chosen depending on the type of the resin, For example, aliphatic hydrocarbon solvents, aromatic hydrocarbon solvents, alcohol solvents, carboxylic acid solvents, ester solvents, ketone solvents, ether solvents, halogenated hydrocarbon solvents, and the like can be used. In more detail, hexane, heptane, benzene, toluene, xylene, methanol, ethanol, propanol, butanol, acetic acid, acrylic acid, ethyl acetate, butyl acetate, acetone, methyl ethyl ketone, methyl isobutyl ketone, tetrahydrofuran, dioxane, methylene chloride, chloroform, carbon tetrachloride, 1,1,1-trichloroethane and chlorobenzene can be used alone or in combination with each other. However, the present invention is not limited thereto. Particularly preferred examples, thereof are ethyl acetate, methyl ethyl ketone and toluene.

A relatively low concentration of solution prepared by dissolving the above cross-linkable silicone resin in such an organic solvent is brought into contact with the surface of the dense layer of the polyimide resin anisotropic membrane. In practice, the silicone resin solution is coated on the surface of the dense layer, or the silicone resin solution is coated on the surface of the dense layer by the spin coating method (a coating method using a spinner in which a centrifugal force due to the spinner is utilized), or the surface of the dense layer is dipped in the resin solution. The solvent is removed at a suitable temperature, for

example, room temperature, or if necessary, by heating up to about 40 to 80°C. By further heating, as described above, at higher temperatures, the cross-linkable resin is cross-linked and converted into an organic solvent-insoluble three dimensional net-like structure. The temperature for this cross-linking varies depending on the type of the cross-linkable silicone resin used and also the types of the hardener and catalyst. The temperature range for cross-linking is usually from 50 to 250°C and preferably from 100 to 200°C. Usually the heating time is from 1 to 60 minutes. Depending on the type of the cross-linkable silicone resin, as described above, it may be cross-linked by irradiating with electromagnetic radiations such as ultraviolet rays, electron rays and X-rays.

A cross-linkable silicone resin which is more preferably used in the present invention is a three or more functional organopolysiloxane represented by the formula (a):

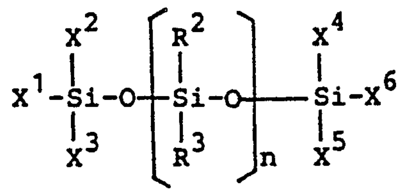
(a)

wherein $X^1$, $X^2$, $X^3$, $X^4$, $X^5$ and $X^6$ are each a monovalent organic group wherein at least three groups are each a reactive group selected from acyloxy groups, alkoxy groups, ketoxime groups, alkyl-substituted amino groups and amide groups, $R^2$ and $R^3$ are each an organic group selected from alkyl groups, halogenated alkyl groups, vinyl groups and aryl groups, and n is an integer of from 400 to 1,000.

In the above organopolysiloxane, $X^1$ to $X^6$ are each a monovalent organic group. At least three of $X^1$ to $X^6$ present at the terminals of the molecule are independently hydrolyzable reactive groups selected from alkoxy groups such as a methoxy group or ethoxy group, acyloxy groups such as an acetoxy group, ketoxime groups such as a methyl ethyl ketoxime group or a dimethyl ketoxime group, and alkyl-substituted amino groups such as a diethylamino group, or an amide group.

Monovalent organic groups other than the above reactive groups include alkyl groups, vinyl groups, aminoalkyl groups, epoxyalkyl groups, chloroalkyl groups and aryl groups. $R^2$ and $R^3$ are each an organic group selected from alkyl groups preferably having from 1 to 9 carbon atoms, halogenated alkyl groups, vinyl groups and aryl groups. Preferred examples thereof are methyl and ethyl groups, fluoroalkyl groups, vinyl groups and phenyl groups.

The repeating unit of the formula (a) may be partially replaced by a unit of the formula:

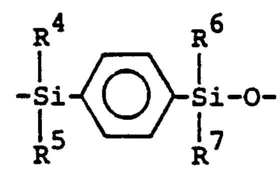
(aa)

wherein $R^4$, $R^5$, $R^6$ and $R^7$ are as defined for $R^2$ and $R^3$.

Representative examples of such organopolysiloxanes are shown below.

Alkoxy Organopolysiloxanes:

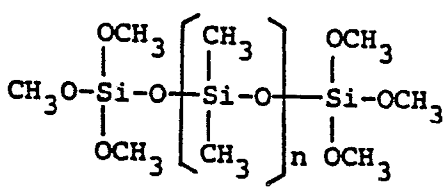
(b)

Ketoxime Organopolysiloxanes:

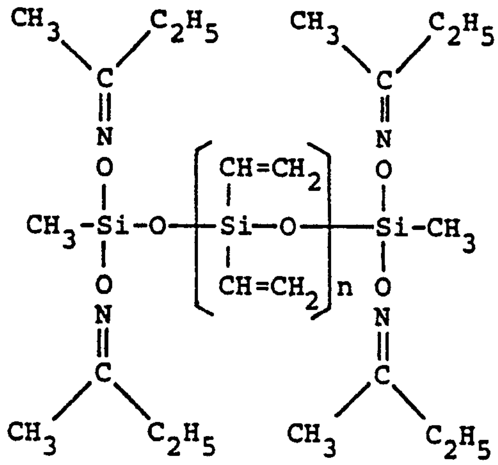

(c)

Acyloxy Organopolysiloxanes:

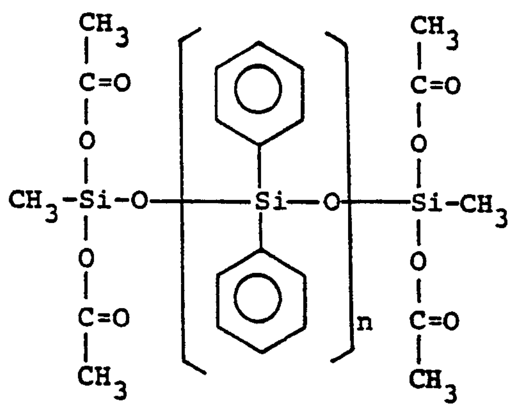

(d)

Amino Organopolysiloxanes:

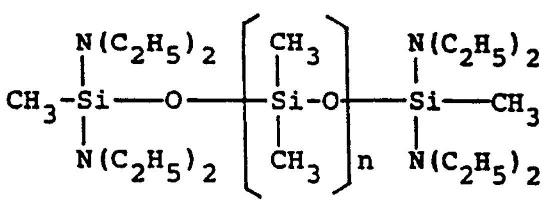

(e)

Amide Organopolysiloxanes:

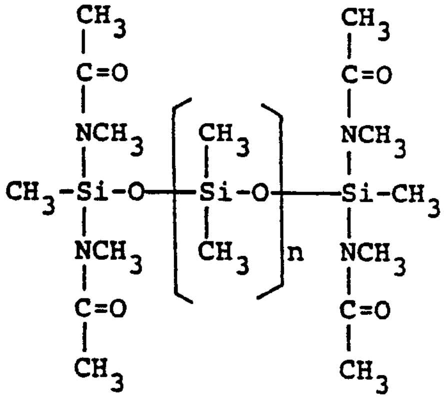

(f)

The above-described cross-linkable silicone resin is chosen so as to satisfy the above requirements, taking into consideration the molecular weight cut-off of the polyimide resin anisotropic membrane. It is usually preferred to use cross-linkable silicone resins having an average molecular weight of from 10,000 to 200,000, preferably from 30,000 to 80,000.

In the present invention, at least one of the above cross-linkable silicone resins is dissolved in an organic solvent, the organic solution is brought into contact with the surface of the dense layer of the above polyimide resin anisotropic membrane, the organic solvent is removed by evaporation, and the cross-linkable silicone resin is insolubilized by causing hydrolysis at room temperature under the action of moisture in the air followed by a three dimensional cross-linking reaction, whereby a thin film of the cross-linked silicone resin is formed on the surface of the dense layer of the polyimide resin anisotropic membrane.

To the organic solution prepared by dissolving the cross-linkable silicone resin in the organic solvent can be added catalyst such as tin compounds or titanium compounds for the purpose of accelerating the cross-linking reaction. In addition, additives, pigments, fillers, and the like, for example, silica can be added.

The organic solution can be brought into contact with the surface of the dense layer of the anisotropic membrane in any suitable manner such as by a dip coating method or a spin coating method (a coating method utilizing a centrifugal force due to a spinner).

After a thin layer of the organic solution is formed on the surface of the dense layer, the organic solvent is removed by evaporation and, thereafter, the cross-linkable silicone resin is cross-linked to form a cross-linked silicone resin thin film having a three dimensional net-like structure. In the process of the present invention, when a specific cross-linkable silicone resin of the formula (a) is used, the above cross-linking reaction is caused sufficiently satisfactorily by moisture in the air at room temperature and no special cross-linking agent or heating is required. However, for the purpose of accelerating the cross-linking reaction, if necessary, a heat treatment may be applied.

The thickness of the thin film of the cross-linked silicone resin formed on the surface of the dense layer of the polyimide resin anisotropic membrane is usally from 1 to 500 nm (10 to 5,000 Å) and preferably from 10 to 200 nm (100 to 2,000 Å), although it varies depending on the concentration of the resin solution and the thickness of the thin layer of the solution formed on the dense layer. If the thickness of the thin film is too small, defects tend to be formed in the membrane. On the other hand, if it is too great the liquid or gas permeation flux is reduced to such an extent that the membrane is unsuitable for practical use.

In the present invention, it is preferred to irradiate the composite membrane with electromagnetic waves, thereby increasing the cross-linking density thereof.

The above electromagnetic waves are not particularly limited and, for example, radiations such as electron rays, neutron rays, α-rays, β-rays or γ-rays, and ultraviolet rays can be applied. The dose of the radiation is usually from 1 to 50 Mrad and preferably from 3 to 20 Mrad, although it varies depending on the atmosphere in which the radiation is applied, and the temperature.

When the above composite membrane is irradiated with such electromagnetic waves, a radical molecule is formed in the side chain of polyorganosiloxane of the formula (a) which constitutes the thin film and the radical molecule participates in the cross-linking reaction, thereby increasing the cross-linking density. As a result, a composite membrane having excellent mechanical strength, resistance against organic solvents and selective permeability can be obtained.

In the present invention, as described above, the polyimide anisotropic membrane is used as a substrate for the composite membrane and an organic solution of a cross-linkable silicone resin having a high molecular weight can be used as a thin film-forming material. For this reason, the thickness of the cross-linked silicone resin thin film formed on the dense layer of the polyimide ultrafiltration membrane can be greatly reduced. Furthermore, the composite membrane has an excellent mechanical strength. The cross-linked silicone thin film is not soluble and does not swell in organic solvents. Thus the composite membrane is suitable for use in separation of various organic solvents and gases.

Furthermore, in accordance with the present invention, the polyimide resin anisotropic membrane is used as a substrate for the composite membrane and, at the same time, a specific cross-linkable silicone resin is used. Therefore, a very thin and insoluble cross-linked silicone resin thin film can be formed on the dense layer of the polyimide resin anisotropic membrane at room temperature without application of any special heating, and the thus-obtained composite membrane has excellent properties such as mechanical strength, resistance against organic solvent or selective permeability.

The composite membrane of the present invention is effective particularly in removing solutes having a low molecular weight of from several tens to several thousands. For example, the composite membrane is suitable for use in concentration and separation of organic solutions containing low molecular weight solutes, which is in the intermediate region between reverse osmosis and ultrafiltration and is difficult to achieve by membrane separation; in the pervaporation method to separate an organic component such as methanol, ethanol, propanol or acetone, from an aqueous solution containing the organic component; and in separation of a gas mixture.

The composite membrane of the present invention, however, is not limited in its application. As a matter of course, the composite membrane can be used in separation of an aqueous mixture.

The invention is illustrated by the following Examples, with reference to the accompanying drawing which is a cross-section of apparatus for measuring membrane performance.

Example 1

An N-methyl-2-pyrrolidone solution containing 22% by weight of polyimide (intrinsic viscosity [η]: 0.91) having a repeating unit of the formula (II) wherein $R^1$ is

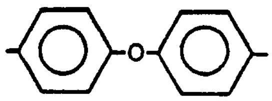

and 22% by weight of diethylene glycol was processed by the conventional phase conversion method described in Japanese Patent Application (OPI) No. 152507/80 to prepare an ultrafiltration membrane having an anisotropic structure as described above in which the thickness was 200 μm and the molecular weight cut-off was 20,000.

The pure toluene permeation flux of the above ultrafiltration membrane was 155 $l/m^2 \cdot hr$ under conditions of temperature 20°C and pressure 2 $kg/cm^2$. The rejection of polyethylene glycol, as determined using a toluene solution containing 5,000 ppm of polyethylene glycol having an average molecular weight of 20,000, was 90.7%.

A mixture of 0.4 part by weight of silanol-terminated polydimethylsiloxane (XI) having an average molecular weight of 36,000, 0.15 part by weight of acetoxy-terminated polydimethylsiloxane (XIII) having an average molecular weight of 36,000, and 0.05 part by weight of triisocyanate (COLONATE L) was dissolved in 100 parts by weight of methyl ethyl ketone to prepare a 0.55% by weight polydimethylsiloxane solution.

The above polyimide ultrafiltration membrane was converted into a glycerin-containing dry membrane. On the surface of the dense layer of the membrane, the above cross-linkable silicone resin solution was uniformly coated at room temperature by dropping by means of a spinner (1,200 rpm). The membrane was then heated up to about 60°C to completely evaporate the methyl ethyl ketone. The membrane was further heated at 110°C for 5 minutes to cross-link the silanol-terminated polydimethylsiloxane and acetoxy-terminated polydimethylsiloxane. As a result, a 50 nm (500 Å) thick, insoluble silicone resin thin film was formed on the surface of the polyimide ultrafiltration membrane, thereby yielding a composite membrane of the present invention.

As shown in the Figure, the above-obtained composite membrane 4 (effective membrane area, 30.2 $cm^2$) was fitted to an opening of a container 3 with a liquid inlet 1 and a liquid outlet 2. The composite membrane was supported by a porous sintered metal plate 5, and an evacuation chamber 6 at the side of the metallic plate was evacuated. A liquid of water and ethanol (50:50 by weight) was introduced through the liquid inlet 1 and withdrawn through the outlet 2. In this manner the liquid was recycled. The evacuation chamber 6 was evacuated to 20 mmHg by means of a vacuum pump. Between the evacuation chamber 6 and the vacuum pump was provided a liquid nitrogen cooling trap where permeated gas was liquefied and the membrane permeated liquid was collected. The permeation flux was 8.3 $l/m^2 \cdot hr$, and the composition of the permeated liquid was 9% by weight water and 91% by weight ethanol.

The rejection of polyethylene glycol of the above composite membrane, as determined using an ethanol solution containing 5,000 ppm of polyethylene glycol having an average molecular weight of 1,000 under conditions of temperature 20°C and pressure 4 $kg/cm^2$, was 90.4%. The permeation flux was 21 $l/m^2 \cdot hr$.

Example 2

An N-methyl-2-pyrrolidone solution containing 25% by weight of a polyimide precursor having a repeating unit of the formula (IV) wherein $R^1$ is

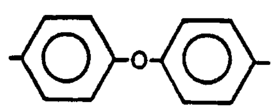

i.e., polyamic acid (intrinsic viscosity [η]: 2.05), and 35% by weight of diethylene glycol dimethyl ether was processed by the conventional phase conversion method to prepare an ultrafiltration membrane having an anisotropic structure in which the thickness was 200 μm. This ultrafiltration membrane was dipped in a mixed solvent of acetic anhydride/pyridine (50:50 by weight) at 40°C for 60 minutes to produce an ultrafiltration membrane made of the above polyimide (molecular weight cut-off: 50,000).

The pure toluene permeation flux of the ultrafiltration membrane under conditions of temperature 20°C and pressure 2 $kg/cm^2$ was 230 $l/m^2 \cdot hr$.

A mixture of 0.25 part by weight of vinyl-terminated polydimethylsiloxane (VII) having an average molecular weight of 65,000, 0.25 part by weight of vinyl-terminated polydimethylsiloxane (VIII) having an average molecular weight of 65,000, and 0.1 part by weight of benzoyl peroxide was dissolved in 100 parts by weight of toluene to prepare a 0.5% by weight polydimethylsiloxane solution.

The polydimethylsiloxane solution was uniformly coated at room temperature on the surface of the dense layer of the above polyimide ultrafiltration membrane, heated to about 60°C to completely remove

the toluene, and then further heated at 120°C for 10 minutes to crosslink the vinyl-terminated polydimethylsiloxane, thereby forming a 90 nm (900 Å) thick, insoluble silicone resin thin film on the dense layer of the polyimide ultrafiltration membrane, whereby a composite membrane of the present invention was obtained.

This composite membrane was fitted to the same apparatus as used in Example 1, and a water/acetone (50:50 by weight) mixture was treated with the membrane. The permeation flux was 9.7 $l/m^2 \cdot hr$, and the permeated liquid was composed of 21% by weight water and 79% by weight acetone.

Example 3

A mixture of 0.7 part by weight of aminopropyl-terminated polydimethylsiloxane (XIV) having an average molecular weight of 36,000 and 0.07 part by weight of COLONATE L was dissolved in 100 parts by weight of ethyl acetate to prepare a 0.7% by weight polydimethylsiloxane solution.

The polydimethylsiloxane solution was uniformly coated at room temperature on the surface of the dense layer of the same polyimide ultrafiltration membrane as in Example 1, heated to about 40°C to completely evaporate the ethyl acetate, and then further heated at 100°C for 10 minutes to cross-link the aminopropyl-terminated polydimethylsiloxane, thereby forming a 120 nm (1,200 Å) thick, insoluble silicone resin thin film on the surface of the dense layer of the polyimide resin ultrafiltration membrane, whereby a composite membrane of the present invention was obtained.

This composite membrane was fitted to the apparatus used in Example 1, and a water/methanol (50:50 by weight) mixture was treated with the membrane. The permeation flux was 10.9 $l/m^2 \cdot hr$, and the permeated liquid was composed of 16% by weight water and 84% by weight methanol.

Example 4

A mixture of 0.75 part by weight of methacryloxypropyl-terminated polydimethylsiloxane (X) having an average molecular weight of 36,000 and 1.0 part by weight of benzoyl peroxide was dissolved in 100 parts by weight of toluene to prepare a 0.7% by weight polydimethylsiloxane solution.

The polydimethylsiloxane solution was uniformly coated on the surface of the dense layer of the same polyimide ultrafiltration membrane as used in Example 1 at room temperature, heated up to about 50°C to completely evaporate the toluene, and then further heated at 110°C for 10 minutes to cross-link the methacryloxypropyl polydimethylsiloxane, thereby forming a 100 nm (1,000 Å) thick, insoluble silicone resin thin film on the surface of the dense layer of the polyimide ultrafiltration membrane, whereby a composite membrane of the present invention was obtained.

With this composite membrane, the gas permeation flux P for various gases was measured. Also the coefficient of separation α was determined by dividing the permeation flux by the permeation flux of nitrogen.

TABLE 1

| Gas | Permeation Flux P [$cm^3(STP)/cm^2 \cdot sec \cdot cmHg$] | Coefficient of Separation α |
|---|---|---|
| $H_2$ | $8.4 \times 10^{-2}$ | 44 |
| He | $4.4 \times 10^{-2}$ | 23 |
| $CO_2$ | $1.7 \times 10^{-2}$ | 8.9 |
| $O_2$ | $4.5 \times 10^{-2}$ | 2.4 |
| $N_2$ | $1.9 \times 10^{-3}$ | 1 |

Example 5

A composite membrane produced in the same manner as in Example 1 was irradiated with electron rays at a dose of 10 Mrad in a nitrogen gas atmosphere at room temperature using an electron ray-emitting apparatus (Model CB-150 ELECTROCURTAIN produced by ESI Co., Ltd.).

This composite membrane was fitted to the same apparatus as used in Example 1, and a liquid consisting of water and ethanol (50:50 by weight) was treated. The permeated liquid was composed of 6% by weight water and 94% by weight ethanol, and the permeation flux was 7.5 $l/m^2 \cdot hr$.

The composite membrane was measured for membrane performance under the same conditions as in Example 1. The rejection of polyethylene glycol (average molecular weight: 1,000) was 94.0%, and the permeation flux was 17 $l/m^2 \cdot hr$.

Example 6

An N-methyl-2-pyrrolidone solution containing 18% by weight of a polyimide resin (intrinsic viscosity [η]: 0.91) having a repeating unit:

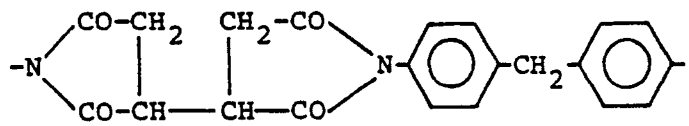

and 22% by weight of diethylene glycol was processed by the conventional phase conversion method described in Japanese Patent Application (OPI) No. 152507/80 to obtain an ultrafiltration membrane having an anisotropic structure as described above in which the thickness was 200 µm and the molecular weight cut-off was 50,000.

The rejection of polyethylene glycol of the ultrafiltration membrane, as determined at a temperature of 20°C under a pressure of 4 $kg/cm^2$ using an ethanol solution containing 5,000 ppm of polyethylene glycol having an average molecular weight of 1,000 was 1.0%, and the permeation flux was 95 $l/m^2 \cdot hr$.

Two parts by weight of polyorganosiloxane having an average molecular weight of 64,000 was dissolved in 100 parts by weight of toluene to prepare a 2.0% by weight cross-linkable silicone resin solution.

The above ultrafiltration membrane was converted into a glycerin-containing dry membrane. Then, the surface of the dense layer of the ultrafiltration membrane was dipped in the cross-linkable silicone resin solution for about 60 seconds to uniformly coat the cross-linkable silicone resin solution on the surface of the dense layer. After coating, the toluene was evaporated at room temperature, and the membrane was allowed to stand in the air for 24 hours, whereby a composite membrane comprising the polyimide ultrafiltration membrane with an about 50 nm (500 Å) thick cross-linked silicone resin thin film form on the dense layer thereof was obtained.

The composite membrane was measured for membrane performance under the same conditions as above. The rejection of polyethylene glycol was 88.2%, and the permeation flux was 25 $l/m^2 \cdot hr$.

Example 7

An N-methyl-2-pyrrolidone solution containing 22.3% by weight of a polyimide resin (intrinsic viscosity [η]: 0.95) having a repeating unit:

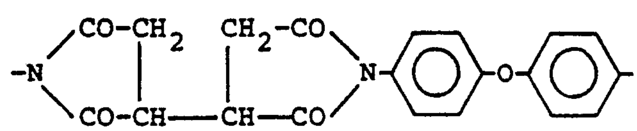

and 22.3% by weight of diethylene glycol was processed in the same manner as in Example 6 to produce an ultrafiltration membrane having a thickness of 220 µm and a molecular weight cut-off of 20,000.

In 100 parts by weight of ethyl acetate was dissolved 1.8 parts by weight of polyorganosiloxane (formula (c)) having an average molecular weight of 69,000 to prepare a 1.8% by weight cross-linkable silicone resin solution.

The cross-linkable silicone resin solution was uniformly coated on the surface of the dense layer of the ultrafiltration membrane which is a glycerin-containing dry membrane by dropping it at room temperature using a spinner (1,200 rpm). Immediately after coating, the ethyl acetate vaporized at room temperature. The membrane was allowed to stand in the air for 24 hours, whereby a composite membrane comprising the polyimide ultrafiltration membrane with an about 20 nm (200 Å) thick cross-linked silicone resin thin film formed on the surface of the dense layer thereof was obtained.

The membrane was fitted to the same apparatus as used in Example 1, and a liquid consisting of water and ethanol (50:50 by weight) was treated.

The permeated liquid was composed of 8% by weight water and 92% by weight ethanol, and the permeation flux was 9.8 $l/m^2 \cdot hr$.

Example 8

A composite membrane with an about 100 nm (1,000 Å) thick cross-linked silicone resin thin film formed thereon was produced in the same manner as in Example 7.

Oxygen and nitrogen permeation fluxes ($Cm^3(STP)/cm^2 \cdot sec \cdot cmHg$) of the membrane were measured at 25°C by the high vacuum method and found to be $1.5 \times 10^{-3}$ and $6.8 \times 10^{-4}$, respectively. The oxygen separation coefficient, α, as calculated by dividing the oxygen permeation flux by the nitrogen permeation flux, was 2.2.

Example 9

A composite membrane with an about 60 nm (600 Å) thick cross-linked silicone resin thin film formed thereon was produced in the same manner as in Example 8.

This composite membrane was irradiated with electron rays at a dose of 10 Mrad in a nitrogen atmosphere at room temperature by means of an electron ray-emitting apparatus (Model CB—150 ELECTROCURTAIN produced by ESI Co., Ltd.).

The composite membrane was measured for membrane performance under the same conditions as in Example 1. The rejection of polyethylene glycol was 95.3% and the permeation flux was 15 $l/m^2 \cdot hr$.

The composite membrane was fitted to the same apparatus as used in Example 1, and a liquid consisting of water and ethanol (50:50 by weight) was treated. The permeated liquid was composed of 5% by weight water and 95% by weight ethanol, and the permeation flux was 6.8 $l/m^2 \cdot hr$.

Example 10

A composite membrane with an about 80 nm (800 Å) thick cross-linked silicone resin thin film formed thereon was produced in the same manner as in Example 7.

This composite membrane was irradiated with elecron rays at a dose of 20 Mrad in the same manner as in Example 9. Oxygen and nitrogen permeation fluxes ($cm^3(STP)/cm^2 \cdot sec \cdot cmHg$) and separation coefficient α of the composite membrane were measured by the same method as in Example 8 and found to be $1.9 \times 10^{-3}$, $7.6 \times 10^{-4}$ and 2.5, respectively.

**Claims**

1. A composite membrane comprising an organic resin substrate bearing a silicone resin thin film on a surface thereof, characterised in that the substrate is an anisotropic membrane having a porous layer continuously connected to a dense surface layer and formed of a polyimide resin consisting essentially of a repeating unit represented by the following general formula (I):

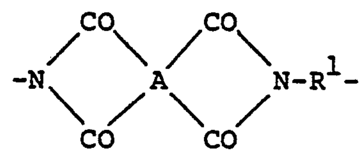

(I)

wherein A is a tetravalent aliphatic or aromatic group, and $R^1$ is a divalent aromatic, alicyclic or aliphatic hydrocarbon group, or a divalent organic group comprising the hydrocarbon groups linked together through a divalent organic linking group, in that the polyimide resin anisotropic membrane has a molecular weight cut-off of from 1,000 to 100,000, in that the thin film is formed of the cross-linked silicone resin which has an average molecular weight equivalent to or greater than the molecular weight cut-off of the polyimide resin anisotropic membrane, in that the thin film is borne by the dense surface layer of the anisotropic membrane so that the silicone resin does not permeate into the inside of the membrane, and in that the thickness of the thin film is 10 to 5,000 Å.

2. A membrane as claimed in Claim 1, in which the polyimide resin consists essentially of a repeating unit of the following general formula (II):

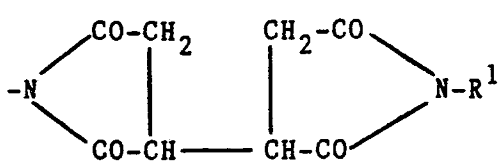

(II)

wherein $R^1$ is as defined above.

3. A process for producing a composite membrane which comprises contacting a solution of a cross-linkable silicone resin in an organic solvent with the dense surface layer of an anisotropic membrane as defined in Claim 1 or 2, characterized in that the cross-linkable silicone resin has an average molecular weight equivalent to or greater than a moleular weight cut-off of the anisotropic membrane, in that the anisotropic membrane has the molecular weight cut-off of from 1,000 to 1,000,000 and in that the concentration of the cross-linkable silicone resin in the solution is from 0.01 to 10% by weight.

4. A process as claimed in Claim 3, wherein the cross-linkable silicone resin is represented by the following general formula (IV):

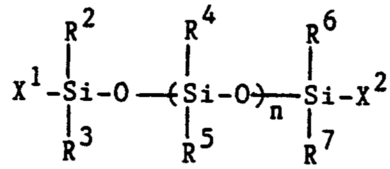

(VI)

wherein $X^1$ and $X^2$ are each independently a reactive group selected from vinyl groups, acryloxyalkyl groups, metharyloxyalkyl groups, hydroxy groups, hydroxyalkyl groups, acyloxy groups, aminoalkyl groups and carboxyalkyl groups, $R^2$, $R^3$, $R^4$, $R^5$, $R^6$ and $R^7$ are each independently an organic group selected from alkyl groups halogenated alkyl groups, vinyl groups and aryl groups, and n is an integer of from 400 to 1,000, the repeating unit in the formula (VI) optionally being partially replaceable by a unit of the following general formula (VIA):

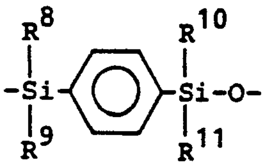

(VIA)

wherein $R^8$, $R^9$, $R^{10}$ and $R^{11}$ have the same meaning as $R^2$ to $R^7$.

5. A process as claimed in Claim 3, wherein the cross-linkable silicone resin is represented by the following general formula (a):

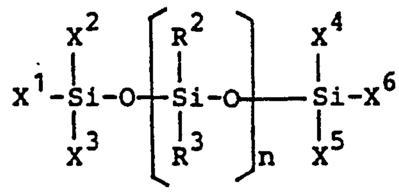

(a)

wherein $X^1$, $X^2$, $X^3$, $X^4$, $X^5$ and $X^6$ are each independently a monovalent organic group with proviso that at least three groups thereof are each independently a reactive group selected from acyloxy groups, alkoxy groups, ketoxime groups, alkyl-substituted amino groups and amide groups, $R^2$ and $R^3$ are each independently an organic group selected from alkyl groups, halogenated alkyl groups, vinyl groups and aryl groups, and *n* is an integer of from 400 to 1,000, the repeating unit in the general formula (a) optionally being partially replaceable by a unit of the following general formula (aa):

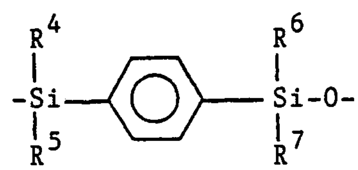

(aa)

wherein $R^4$, $R^5$, $R^6$ and $R^7$ have the same meaning as $R^2$ and $R^3$.

6. A process as claimed in any one of Claims 3 to 5, wherein the thin film is irradiated with electromagnetic waves to increase the cross-linking density.

7. A process as claimed in any one of Claims 3 to 6, wherein the average molecular weight of the cross-linkable silicone resin is from 10,000 to 200,000.

**Patentansprüche**

1. Verbundmembran, umfassend ein Substrat aus einem organischen Harz, das einen dünnen Silikonharzfilm auf einer Oberfläche davon aufweist, dadurch gekennzeichnet, daß das Substrat eine anisotrope Membran mit einer porösen Schicht ist, die kontinuierlich mit einer dichten Oberflächenschicht verbunden ist und aus einem Polyimidharz gebildet ist, das im wesentlichen aus einer wiederkehrenden Einheit der folgenden allgemeinen Formel (I)

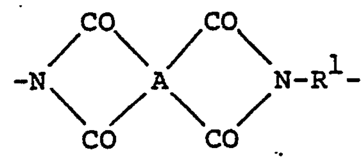

(I)

besteht, worin A eine vierwertige aliphatische oder aromatische Gruppe ist und $R^1$ eine zweiwertige aromatische, alicyclische oder aliphatische Kohlenwasserstoffgruppe oder eine zweiwertige organische Gruppe ist, die die Kohlenwasserstoffgruppen, die miteinander durch eine zweiwertige organische Bindungsgruppe verbindung sind, umfaßt,

wobei die anisotrope Polyimidharzmembran einen Molekulargewichtsabschnitt von 1000 bis 100 000 besitzt, der dünne Film aus dem vernetzten Silikonharz gebildet wird, das ein durchschnittliches Molekulargewicht besitzt, welches äquivalent zu oder größer als der Molekulargewichtabschnitt der anisotropen Polyimidharzmembran ist, der dünne Film von der dichten Oberflächenschicht der anisotropen Membran getragen wird, so daß das Silkonharz nicht in das Innere der Membran eindringt, und die Dicke des dünnen Films 10 bis 5000 Å beträgt.

2. Membran nach Anspruch 1, worin das Polyimidharz in wesentlichen aus einer wiederkehrenden Einheit der folgenden allgemeinen Formel (II)

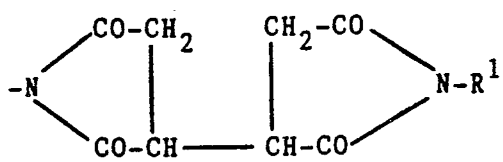

(II)

besteht, worin $R^1$ wie vorstehend definiert ist.

3. Verfahren zur Herstellung einer Verbundmembran, bei dem eine Lösung aus einem vernetzbaren Silikonharz in einem organischen Lösungsmittel mit der dichten Oberflächenschicht einer anisotropen Membran nach Anspruch 1 oder 2 in Berührung gebracht wird, dadurch gekennzeichnet, daß das vernetzbare Silikonharz ein durchschnittliches Molekulargewicht besitzt, das äquivalent zu oder größer als ein Molekulargewichtsabschnitt der anisotropen Membran ist, daß die anisotrope Membran einen Molekulargewichtabschnitt von 1000 bis 1 000 000 aufweist und daß die Konzentration des vernetzbaren silikonharzes in der Lösung 0,01 bis 10 Gew.-% beträgt.

4. Verfahren nach Anspruch 3, worin das vernetzbare Silikonharz die allgemeine Formel (IV)

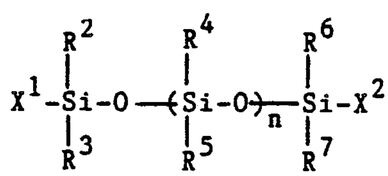

(VI)

besitzt, worin $X^1$ und $X^2$ jeweils unabhängig voneinander eine reaktive Gruppe, gewählt aus Vinylgruppen, Acryloxyalkylgruppen, Methacryloxyalkylgruppen, Hydroxygruppen, Hydroxyalkylgruppen, Acyloxygruppen, Aminoalkylgruppen und Carboxyalkylgruppen, sind, $R^2$, $R^3$, $R^4$, $R^5$, $R^6$ und $R^7$ jeweils unabhängig voneinander eine organische Gruppe, gewählt aus Alkylgruppen, halogenierten Alkylgruppen, Vinylgruppen und Arylgruppen, sind und n eine ganze Zahl von 400 bis 1000 ist, wobei die wiederkehrende Einheit in der Formel (VI) gegebenenfalls teilweise durch eine Einheit der folgenden allgemeinen Formel (VIA)

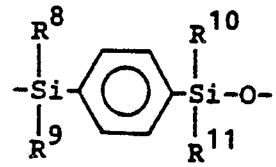

(VIA)

ersetzbar ist, worin $R^8$, $R^9$, $R^{10}$ und $R^{11}$ die gleiche Bedeutung wie $R^2$ bis $R^7$ besitzen.

5. Verfahren nach Anspruch 4, worin das vernetzbare Silikonharz die folgende allgemeine Formel (a)

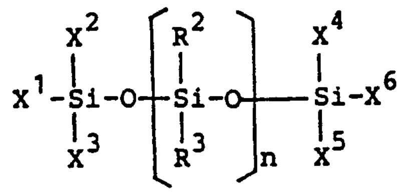

(a)

besitzt, worin $X^1$, $X^2$, $X^3$, $X^4$, $X^5$ und $X^6$ jeweils unabhängig voneinander eine einwertige organische Gruppe bedeuten mit der Maßgabe, daß wenigstens drei Gruppen davon jeweils unabhängig voneinander eine reaktive Gruppe, gewählt aus Acyloxygruppen, Alkoxygruppen, Keoximgruppen alkylsubstituierten Aminogruppen und Amidgruppen, sind, $R^2$ und $R^3$ jeweils unabhängig voneinander eine organische Gruppe, gewählt aus Alkylgruppen, halogenierten Alkylgruppen, Vinylgruppen und Arylgruppen, sind und n eine ganze Zahl von 400 bis 1000 ist, wobei die wiederkehrende Einhit der allgemeinen Formel (a) gegebenenfalls teilweise durch eine Einheit der folgenden allgemeinen Formel (aa)

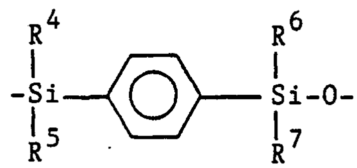

(aa)

ersetzbar ist, worin $R^4$, $R^5$, $R^6$ und $R^7$ die gleiche Bedeutung wie $R^2$ und $R^3$ besitzen.

6. Verfahren nach einem der Ansprüche 3 bis 5, worin der dünne Film mit elektromagnetischen Wellen bestrahlt wird zur Erhöhung der Vernetzungsdichte.

7. Verfahren nach einem der Ansprüche 3 bis 6, worin das durchschnittliche Molekulargewicht des vernetzbaren Silikonharzes 10 000 bis 200 000 beträgt.

**Revendications**

1. Une membrane composite comprenant un support de résine organique portant un film mince de résine de silicone sur une de ses faces, caractérisée en ce que le support est une membrane anisotrope ayant une couche poreuse liée en continu à une couche superficielle dense et formée d'une résine de polyimide consistant essentiellement en motifs récurrents représentés par la formule générale (I) suivante:

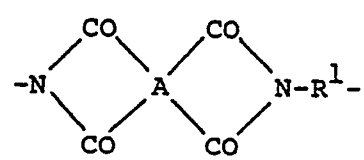

(I)

dans laquelle A est un groupe aliphatique ou aromatique tétravalent et $R^1$ est un groupe hydrocarboné aromatique, alicyclique ou aliphatique divalent, ou un groupe organique divalent comprenant des groupes hydrocarbonés reliés ensemble par un groupe de liaison organique divalent; en ce que la membrane anisotrope de résine de polyimide a un poids moléculaire d'arrêt de 1 000 à 100 000, en ce que le film mince est formé de la résine de silicone réticulée qui a un poids moléculaire moyen équivalent ou supérieur au poids moléculaire d'arrêt de la membrane anisotrope de résine de polyimide; en ce que le film mince est porté par la couche superficielle dense de la membrane anisotrope de telle sorte que la résine de silicone ne pénètre pas à l'intérieur de la membrane; et en ce que l'épaisseur du film mince est de 10 à 5 000 Å.

2. Une membrane selon la revendication 1, dans laquelle la résine de polyimide consiste essentiellement en motifs récurrents de formule générale (II) suivante:

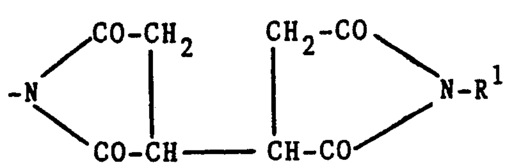

(II)

dans laquelle $R^1$ est tel que défini ci-dessus.

3. Un procédé pour fabriquer une membrane composite qui consiste à mettre en contact une solution d'une résine de silicone réticulable dans un solvant organique avec la couche superficielle dense d'une membrane anisotrope telle que définie à la revendication 1 ou 2, caractérisé en ce que la résine de silicone réticulable a une poids moléculaire moyen équivalent ou supérieur au poids moléculaire d'arrêt de la membrane anisotrope; en ce que la membrane anisotrope a un poids moléculaire d'arrêt de 1 000 à 1 00 000; et en ce que la concentration de la résine de silicone réticulable dans la solution est de 0,01 à 10% en poids.

4. Un procédé selon la revendication 3, dans lequel la résine de silicone réticulable est représentée par la formule générale (VI) suivante:

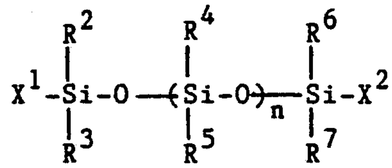

(VI)

dans laquelle $X^1$ et $X^2$ représentent chacun indépendamment un groupe réactif choisi parmi les groupes vinyles, les groupes acrloxyalkyles, les groupes acryloxyalkyles, les groupes hydroxy, les groupes hydroxyalkyles, les groupes acyloxy, les groupes aminoalkyles et les groupes carboxyalkyles, $R^2$, $R^3$, $R^4$, $R^5$, $R^6$ et $R^7$ représentent chacun indépendamment un groupe organique choisi parmi les groupes alkyles, les groupes alkyles halogénés, les groupes vinyles et les groupes aryles et n est un entier de 400 à 1 000, le motif récurrent dans la formule (VI) étant facultativement remplaçable en partie par un motif de formule générale (VIA) suivante:

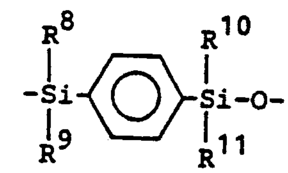

(VIA)

dans laquelle $R^8$, $R^9$, $R^{10}$, et $R^{11}$ ont la même signification que les restes $R^2$ à $R^7$.

5. Un procédé selon la revendication 4, dans lequel la résine de silicone réticulable est représentée par la formule générale (a) suivante:

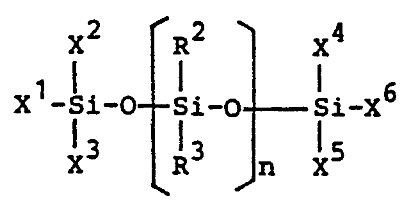

(a)

dans laquelle $X^1$, $X^2$, $X^3$, $X^4$, $X^5$ et $X^6$ représentent chacun un groupe organique monovalent, avec la condition qu'au moins trois de ces groupes soient chacun indépendamment un groupe réactif choisi parmi les groupes acyloxy, les groupes alcoxy, les groupes cétoximes, les groupes amino alkyl-substitués et les groupes amides, $R^2$ et $R^3$ représentent chacun indépendamment un groupe organique choisi parmi les groupes alkyles, les groupes alkyles halogénés, les groupes vinyles et les groupes aryles et n est un entier de 400 à 1 000, le motif récurrent dans la formule générale (a) étant facultativement remplaçable en partie par un motif de formule générale (aa) suivante:

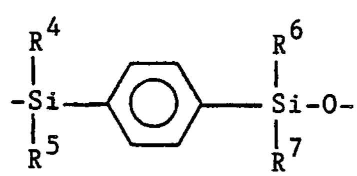

(aa)

dans laquelle $R^4$, $R^5$, $R^6$ et $R^7$ ont la même signification que $R^2$ et $R^3$.

6. Un procédé selon l'une quelconque des revendications 3 à 5, dans lequel le film mince est irradié par des ondes électromagnétiques pour augmenter la densité de réticulation.

7. Un procédé selon l'une quelconque des revendications 3 à 6, dans lequel le poids moléculaire moyens de la résine de silicone réticulable est de 10 000 à 200 000.

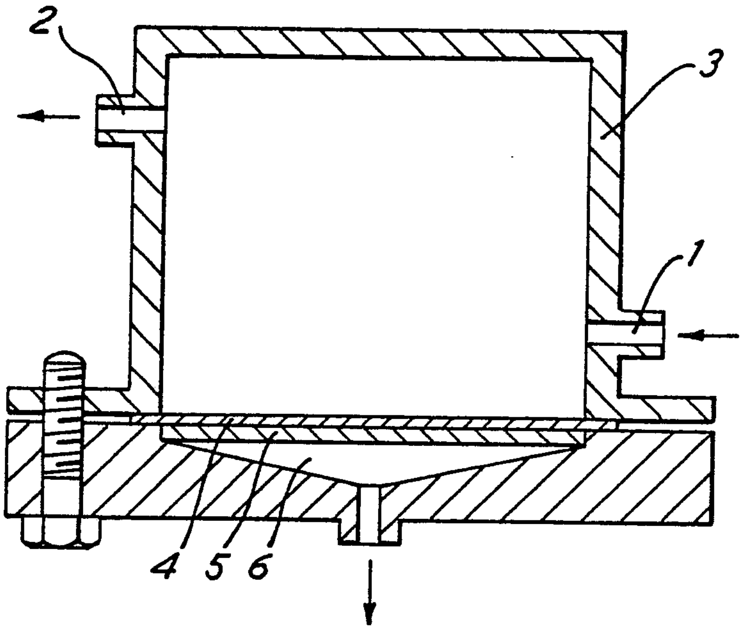
2
3
1
4
5
6